# EUROPÄISCHE PATENTSCHRIFT

(11) **EP 0 760 066 B1**
(45) Veröffentlichungstag und Bekanntmachung des Hinweises auf die Patenterteilung: **29.07.1998**
(21) Anmeldenummer: 95921746.4
(22) Anmeldetag: 12.05.1995
(51) Int. Cl.: F16H 61/06

(54) **VERFAHREN ZUM STEUERN EINES AUTOMATGETRIEBES**
PROCESS FOR CONTROLLING AN AUTOMATIC GEARBOX
PROCEDE DE COMMANDE D'UNE BOITE DE VITESSES AUTOMATIQUE

(30) Priorität: 19.05.1994 DE 4417477
(43) Veröffentlichungstag der Anmeldung: 05.03.1997
(73) Patentinhaber: ZF FRIEDRICHSHAFEN Aktiengesellschaft, 88038 Friedrichshafen (DE)
(72) Erfinder: GIERER, Georg, D-88079 Kressbronn (DE); WIEST, Wolfgang, D-88400 Biberach (DE)
(74) Vertreter: Raue, Reimund
(86) Internationale Anmeldenummer: EP9501794
(87) Internationale Veröffentlichungsnummer: WO9532375

(56) Entgegenhaltungen:
- EP-A- 0 337 495
- WO-A-90/04732
- DE-A- 4 111 514
- US-A- 4 753 134

## Beschreibung

Die Erfindung betrifft ein Verfahren zum Steuern eines Automatgetriebes.

Bei einer aus dem Stand der Technik, zum Beispiel EP-PS 0 324 758, bekannten ersten Gattung von Automatgetrieben ist einer Kupplung ein Kupplungsventil zugeordnet. Das Kupplungsventil bestimmt hierbei den Druckverlauf und das Druckniveau in der Kupplung während eines Schaltvorganges. Das Kupplungsventil besteht aus einem Ventilschieber mit Steuerkolben, einer Druckfeder und einem Kolben. Die Druckfeder stützt sich auf der einen Seite am Ventilschieber mit Steuerkolben ab und auf der anderen Seite an der Innenseite des Kolbens. Der Kolben ist verschiebbar, wobei an der Kolbenaußenseite das gleiche Druckniveau ansteht wie an der Kupplung. Die aus dem Druck resultierende Kraft verschiebt den Kolben. Dieser Kraft ist die Kraft der Druckfeder entgegengerichtet. Die Federkonstante und der Federweg legen somit die Steigung der Druckrampe an der Kupplung und die Druckhöhe fest.
Zusätzlich kann die Kolbeninnenseite mit Druck beaufschlagt werden. Durch diesen zusätzlichen Druck ist es möglich, die Druckrampe entsprechend zu erhöhen. In den Bereich der Druckrampe fällt der Lastübernahmepunkt der Kupplung. Am Lastübernahmepunkt übernimmt die Kupplung das Motormoment. Das Druckniveau auf der Innenseite des Kolbens wird über einen elektromagnetischen Druckregler von einem elektronischen Steuergerät bestimmt. Bekanntermaßen berechnet das elektronische Steuergerät aufgrund von verschiedenen Eingangsgrößen, zum Beispiel Motormoment, Fahrzeuggeschwindigkeit und Drosselklappensignal, das Druckniveau in der zu schaltenden Kupplung. Hierbei unterscheidet das elektronische Steuergerät in eine Hoch- oder Rückschaltung und in einen ersten oder zweiten Schaltungsbereich, d. h. Zug oder Schub. Bei Schaltungen nahe des Zug-/Schub-Übergangs berechnet das elektronische Steuergerät aufgrund der Eingangsgröße einen niederen Druckwert für die Kolbeninnenseite des Kupplungsventils. Durch die Druckfeder stellt sich dennoch ein rampenförmiger Druckverlauf an der Kupplung ein, so daß die Kupplung sicher das Motormoment übernimmt.

Bei einer ebenfalls aus dem Stand der Technik, zum Beispiel EP-PS 0 440 748, bekannten zweiten Gattung eines Automatgetriebes bestimmt ein elektromagnetischer Druckregler unmittelbar den Druckverlauf der zu schaltenden Kupplung. Der elektromagnetische Druckregler bildet hierbei die Druckrampe nach. Bei Schaltungen nahe des Zug-/Schub-Überganges tritt hierbei das Problem auf, daß das elektronische Steuergerät aufgrund der Eingangsgrößen einen niedrigen Druckwert berechnet. Dies wiederum bewirkt, daß der Lastübernahmepunkt der zu schaltenden Kupplung zeitlich sehr spät liegt, so daß lange Schaltzeiten auftreten können. Aus Sicherheitsgründen besitzen derartige Automatgetriebe eine Zeitstufe, welche die maximale Schaltzeit begrenzt. Nach Ablauf dieser Zeitstufe wird die zu schaltende Kupplung mit sehr hohem Druckniveau zwangsweise geschlossen. Dies verursacht einen deutlichen Schaltruck und eine nicht akzeptable Komforteinbuße.

Die Erfindung hat die Aufgabe, bei einem Automatgetriebe der zweiten Gattung die vorgenannten Nachteile zu vermeiden.

Die Aufgabe wird erfindungsgemäß gelöst, indem ein elektronisches Steuergerät aufgrund der Schaltungsanforderung eine Schaltungsart bestimmt. Hierbei entspricht eine erste Schaltungsart einer Hochschaltung um einen Gang. Eine zweite Schaltungsart entspricht einer Rückschaltung um einen Gang und eine dritte Schaltungsart entspricht einer Rückschaltung um mehr als einen Gang. Danach bestimmt das elektronische Steuergerät aus einer den Leistungswunsch des Fahrers repräsentierenden Kenngröße und einer Drehzahl einer Brennkraftmaschine oder Abtriebsdrehzahl des Automatgetriebes einen aktuellen Betriebspunkt. Danach wählt es in Abhängigkeit der Schaltungsart aus mehreren Kennlinien eine Kennlinie aus, wobei die Kennlinien eine Zuordnung von theoretischen Betriebspunkten zur Schaltungsart enthalten. Ein erster Bereich oberhalb der ausgewählten Kennlinie stellt hierbei den Zugbereich dar. Oberhalb der ausgewählten Kennlinie bedeutet somit den Bereich in Richtung zunehmender Werte der den Leistungswunsch repräsentierenden Kenngröße. Ein zweiter Bereich unterhalb der Kennlinie stellt den Schubbereich dar. Unterhalb der Kennlinie bedeutet somit den Bereich in Richtung abnehmender Werte der den Leistungswunsch des Fahrers repräsentierenden Kenngröße. Aufgrund der Lage des aktuellen Betriebspunktes steuert sodann das elektronische Steuergerät den Druckverlauf der an der Schaltung beteiligten Kupplung gemäß der Zug- oder Schub-Berechnung.
Die Lösung bietet den Vorteil, daß der jeweiligen Schaltungsart ein eigener Schaltungsbereich zugeordnet ist. Hierdurch läßt sich eine bessere Anpassung des Druckverlaufes der zu schaltenden Kupplung an den tatsächlichen Zustand des Fahrzeuges bei Schaltungen erzielen. Unter Schaltanforderungen im Sinne der Erfindung sind alle Schaltungen zu verstehen, die durch Über- oder Unterschreiten einer Schaltkennlinie aufgrund von Eingangsgrößen veranlaßt werden. Diese vom Fahrer vorgebbaren Eingangsgrößen sind zum Beispiel das Signal einer Drosselklappenstellung, Fahrzeuggeschwindigkeit oder Fahraktivität.

In Ausgestaltung hierzu wird vorgeschlagen, daß die Zuordnung der theoretischen Betriebspunkte gleicher Schaltungsart von einem Toleranzband umgeben sind. In Ausgestaltung hierzu wird vorgeschlagen, daß bei Änderung des aktuellen Betriebspunktes in Richtung des theoretischen Betriebspunktes der Schaltungsbereich erst bei Verlassen des Toleranzbandes aktualisiert wird.
Hierdurch ergibt sich der Vorteil, daß eine Schaltbereichsbestimmung erst dann durchgeführt wird, wenn der aktuelle Betriebspunkt sicher in dem jeweiligen Schaltungsbereich liegt. Durch das Toleranzband werden Abweichungen vom theoretischen Betriebspunkt, der zum Beispiel aus Versuchen ermittelt wurde, zum wirklichen Betriebspunkt aufgrund der Serienstreuung berücksichtigt.

In der Zeichnung sind die Ausführungsbeispiele dargestellt.

Es zeigen:
- Fig. 1: ein Kennfeld der Schaltungsarten und
- Fig. 2: ein Kennfeld der Schaltungsarten mit Toleranzband.

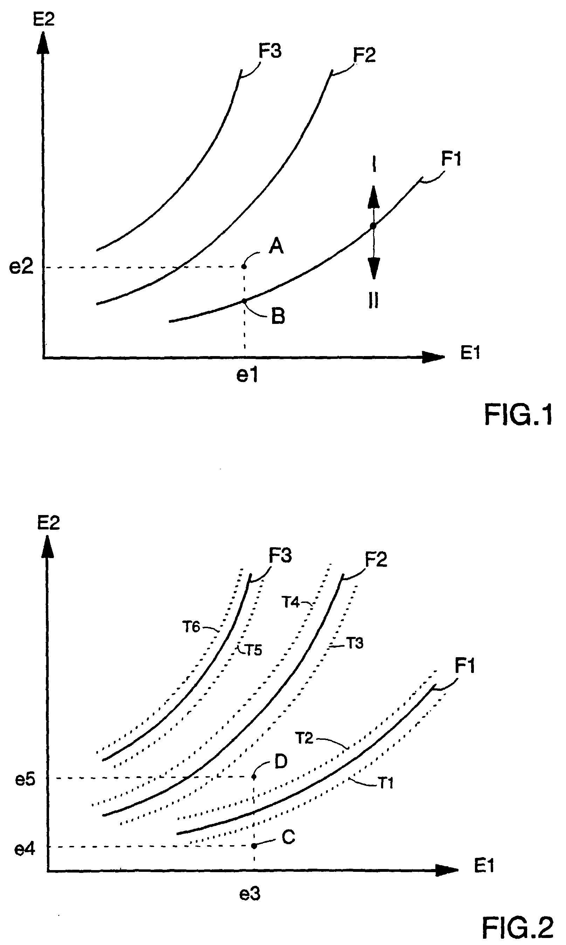

Fig. 1 zeigt ein Kennfeld der Schaltungsarten; hierbei bedeutet F1 eine Hochschaltung um einen Gang, F2 eine Rückschaltung um mehr als einen Gang und F3 eine Rückschaltung um einen Gang. Als Abszisse ist eine Eingangsgröße E1 aufgetragen, dies kann zum Beispiel eine Drehzahl einer Brennkraftmaschine oder Abtriebsdrehzahl des Automatgetriebes sein. Als Ordinate ist eine Eingangsgröße E2 abgetragen. Diese repräsentiert den Leistungswunsch des Fahrers und kann zum Beispiel das Signal einer Drosselklappe oder das von der Brennkraftmaschine abgegebene Moment sein. Oberhalb der Kennlinie der Schaltungsart, d. h. zu größeren Werten von E2, befindet sich der erste Schaltungsbereich, unterhalb der Kennlinie der zweite Schaltungsbereich.
Der Ablauf des Verfahrens ist folgendermaßen:
Nachdem das elektronische Steuergerät eine Schaltanforderung festgestellt hat, bestimmt dieses die Schaltungsart, zum Beispiel eine Hochschaltung um einen Gang. Danach wird aus den beiden Eingangsgrößen E1 und E2 der aktuelle Betriebspunkt ermittelt. In Fig. 1 ist dies der Punkt A mit dem Abszissenwert e1 und Ordinatenwert e2. Danach wird der aktuelle Betriebspunkt A mit dem theoretischen Betriebspunkt B verglichen und aus dem Vergleich ergibt sich der Schaltungsbereich. In Fig. 1 liegt der Betriebspunkt A bei einem größeren Wert der Eingangsgröße E2 als wie der Betriebspunkt B. Das elektronische Steuergerät berechnet den Druckverlauf der zu schaltenden Kupplung für eine Hochschaltung im ersten Schaltungsbereich.

Fig. 2 zeigt das gleiche Kennfeld der Schaltungsarten; hierbei sind jedoch die drei Kennlinien F1, F2 und F3 jeweils von einem Toleranzband T1 bis T6 umgeben. Die Funktion ist folgende:
Nachdem das elektronische Steuergerät eine Schaltanforderung festgestellt hat, zum Beispiel eine Hochschaltung um einen Gang, ermittelt es aufgrund der beiden Eingangsgrößen E1 und E2 den aktuellen Betriebspunkt. Dies entspricht zum Beispiel dem Punkt C mit dem Abszissenwert e3 und dem Ordinatenwert e4. Der aktuelle Betriebspunkt C liegt im zweiten Schaltungsbereich, d. h. unterhalb von F1. Das elektronische Steuergerät berechnet somit einen Druckverlauf in der zu schaltenden Kupplung für eine Hochschaltung im zweiten Schaltungsbereich.
Ändert sich während der Schaltung der aktuelle Betriebspunkt von C nach D, Ordinatenwert e5, indem zum Beispiel der Fahrer die Drosselklappe betätigt, so ändert das elektronische Steuergerät erst bei Überschreiten der Toleranzkennlinie T2 die Schaltungsberechnung. Es wird dann eine Schaltung im ersten Schaltungsbereich berechnet.

### Bezugszeichen

- F1: Kennlinie Hochschaltung um einen Gang
- F2: Kennlinie Rückschaltung um mehr als einen Gang
- F3: Kennlinie Rückschaltung um einen Gang
- T1/T2: Toleranzband zu F1
- T3/T4: Toleranzband zu F2
- T5/T6: Toleranzband zu F3
- E1: Eingangsgröße
- E2: Eingangsgröße

## Patentansprüche

1. Verfahren zum Steuern eines Automatgetriebes mit Kupplungen, deren Schaltzustand und Druckverlauf über elektromagnetische Stellglieder von einem elektronischen Steuergerät bestimmt werden, das elektronische Steuergerät aufgrund vom Fahrer vorgebbarer Eingangsgrößen eine Schaltanforderung zum Hoch- oder Herunterschalten erkennt, dadurch **gekennzeichnet,** daß das elektronische Steuergerät aufgrund der Schaltungsanforderung eine Schaltungsart bestimmt, wobei eine erste Schaltungsart einer Hochschaltung um einen Gang entspricht, eine zweite Schaltungsart einer Rückschaltung um einen Gang entspricht und eine dritte Schaltungsart einer Rückschaltung um mehr als einen Gang entspricht, das elektronische Steuergerät aus einer den Leistungswunsch des Fahrers repräsentierenden Kenngröße (E2) und einer Drehzahl einer Brennkraftmaschine oder Abtriebsdrehzahl des Automatgetriebes (E1) einen aktuellen Betriebspunkt bestimmt, in Abhängigkeit der Schaltungsart aus mehreren Kennlinien (F1, F2, F3) eine Kennlinie auswählt, wobei jede Kennlinie eine Zuordnung von theoretischen Betriebspunkten darstellt, hierbei ein erster Bereich oberhalb der ausgewählten Kennlinie in Richtung zunehmender Werte des den Leistungswunsch des Fahrers repräsentierenden Kenngröße (E2) den Zugbereich und ein zweiter Bereich unterhalb der Kennlinie in Richtung abnehmender Werte des den Leistungswunsch des Fahrers repräsentierenden Kenngröße (E2) den Schubbereich darstellt, das elektronische Steuergerät aus der Lage des Betriebspunktes den ersten oder zweiten Bereich auswählt und den Druckverlauf der an der Schaltung beteiligten Kupplungen gemäß der Zug- oder Schub-Berechnung erfolgt.

2. Verfahren nach Anspruch 1, dadurch **gekennzeichnet,** daß die Zuordnung der theoretischen Betriebspunkte gleicher Schaltungsart (F1, F2, F3) von einem Toleranzband (T1 bis T6) umgeben sind.

3. Verfahren nach Anspruch 2, dadurch **gekennzeichnet,** daß bei Änderung des aktuellen Betriebspunktes in Richtung des theoretischen Betriebspunktes der Schaltungsbereich erst bei Verlassen des Toleranzbandes aktualisiert wird.

## Claims

1. Method for controlling an automatic gearbox with clutches, whose shift state and pressure course are determined via electromagnetic operating members by an electronic control device which recognises a shift demand for shifting up or down on the basis of input values which can be preset by the driver, characterised in that the electronic control device determines a shift mode on the basis of the shift demand, a first shift mode corresponding to an upshift up by one gear, a second shift mode corresponding to a downshift by one gear and a third shift mode corresponding to a downshift by more than one gear, the electronic control device determines an existing operating point from a characteristic value (E2) representing the output desired by the driver and from a rotational speed of an internal combustion engine or output rotational speed of the automatic gearbox (E1), selects a characteristic curve from a plurality of characteristic curves (F1, F2, F3) as a function of the shift mode, each characteristic curve representing a grouping of theoretical operating points, a first range above the selected characteristic curve in the direction of increasing value of the characteristic value (E2) representing the output desired by the driver depicting the traction range and a second range below the characteristic curve in the direction of decreasing value of the characteristic value (E2) representing the output desired by the driver depicting the thrust range, the electronic control device selecting the first or second range from the position of the operating point and effecting the pressure course of the clutches participating in the shift according to the traction or thrust calculation.

2. Method according to claim 1, characterised in that the grouping of theoretical operating points of the same shift mode (F1, F2, F3) are enclosed by a tolerance bend (T1 to T6).

3. Method according to claim 2, characterised in that, during a change in the existing operating point in the direction of the theoretical operating point, the shift range is only actualised after exiting the tolerance band.

## Revendications

1. Procédé pour commander une boîte de vitesses automatique avec des embrayages dont l'état de commande et la variation de la pression sont déterminés par des organes électromagnétiques d'un appareil de commande électronique, l'appareil de commande électronique, grâce à des grandeurs d'entrée déterminables par le conducteur, reconnaissant la demande de changer de vitesse vers le haut ou vers le bas, **caractérisé** en ce que l'appareil de commande électronique détermine un mode de commande suite à une demande de changement de vitesse, un premier mode de commande correspondant à un changement d'une vitesse vers le haut, un deuxième mode à un changement en rétrogradant et un troisième mode à un changement en rétrogradant de plus d'une vitesse, l'appareil de commande électronique déterminant, à partir d'un paramètre représentant la demande de puissance du conducteur (E2) et d'une vitesse de rotation d'un moteur ou de la vitesse de sortie de la boîte de vitesses automatique (E1), un point de fonctionnement actuel, sélectionnant en fonction du mode de changement de vitesse parmi plusieurs courbes caractéristiques (F1, F2, F3) une courbe caractéristique, où chaque courbe caractéristique représente une affectation de points de fonctionnement théoriques, où une première plage au dessus de la courbe sélectionnée dans le sens de valeurs croissantes représente la plage de traction selon le paramètre correspondant à la demande de puissance (E2) du conducteur et une deuxième plage en dessous de la courbe dans le sens de valeurs décroissantes correspondant à la plage de poussée selon la demande de puissance (E2) du conducteur, l'appareil de commande électronique sélectionnant, selon la situation du point de fonctionnement, la première ou la deuxième plage et la variation de pression des accouplements participant au changement de vitesse s'effectuant en fonction du calcul de traction ou de poussée.

2. Procédé selon la revendication 1, **caractérisé** en ce que l'affectation des points de fonctionnement théoriques du même type de changement de vitesse (F1, F2, F3) sont entourés d'une bande de tolérances (T1 à T6).

3. Procédé selon la revendication 2, **caractérisé** en ce que lors du changement du point de fonctionnement actuel en direction du point de fonctionnement théorique, la plage de la commande des vitesses n'est actualisée que lorsque la bande de tolérances est quittée.
